# EUROPEAN PATENT APPLICATION

(11) **EP 1 237 135 A2**
(43) Date of publication of application: **04.09.2002**
(21) Application number: 01130558.8
(22) Date of filing: 21.12.2001
(51) Int. Cl.: G09B 19/00, A63B 69/00, A63B 69/36

(54) **Training method for body movement in sport using mobile image communication**

(30) Priority: 28.12.2000 JP 2000404707
(71) Applicant: Kabushiki Kaisha Asobou's, Tokyo (JP)
(72) Inventor: Katayama, Muneomi, Tokyo (JP)
(74) Representative: EGLI-EUROPEAN PATENT ATTORNEYS

(57) **Abstract**

A video image and data of a trainer which are desired to be seen by a trainee with a mobile communication device can be displayed on a screen, and a video image and/or data of the trainee or a third party can be displayed on the same screen without being overlapped while being linked with each other. A method of this invention includes a high-performance mobile image communication terminal such as a portable telephone, a mobile communication network system such as a PDC or/and a PHS, a gateway for performing protocol conversion or the like, and the Internet, a plurality of cameras, a digital disk recorder, a still image file device, an encoder including a frame synchronizer or the like and a time compression function, a multiplexing function, and a packet transmission function, a video image server connected through an Internet circuit, a terminal which receives data of every move of a player, and a data server which can store data transmitted from the data terminal through a data transfer device and a network circuit and can also store the profile of each player and additional data (contents).

## Description

### BACKGROUND OF THE INVENTION

### Field of the Invention

The present invention relates to a method of searching training for a basic manner of moving a body in a sport performed by moving a body.

### Description of the Related Art

According to the present invention, as a training method for training a basic manner of moving a body in a sport performed by moving a body, a trainer has performed a typical action or the like and then cause a trainee to perform an action or the like, and the trainer has explained the difference between the typical action and the action to the trainee with voice or body action. In addition, a larger number of media described as follows have been spread. That is, a trainer herself or himself performs a typical action, and voice, a training book, or the like is added to the typical action, so that self-training can be achieved.

The following invention is disclosed as USP. No. 5,184,295 (issued on February 2, 1993). That is, a typical action or the like is input as a video image, and the image and an action or the like performed by a trainee are overlapped by an arithmetic operation process, so that training is performed with a three-dimensional image. However, according to this patent, since the excellent typical action or the like is recorded as a video image in advance, training which is fitted to the age and the physical strength of the trainee and which is effective for only the trainee or training which performs a gradual training method in accordance with each trainee cannot be achieved.

Therefore, an action or the like of a trainee is recorded as a video image, one screen of this image is reproduced on a display, and a range of an action to which attention must be paid, a basic line or the like of a body constituting an optimum pose, and the like are indicated on an action image of the trainee on the screen with lines or the like. This application was filed by the present inventor of this application prior to the above invention. In Japan, the application was filed on August 3, 1994. The application is disclosed in Japanese Unexamined Patent Publication No. 7-144038, and is patented on June 12, 1999 as Patent No. 5,857,855 in the United States of America.

On the other hand, with recent development of communication devices, a novel digital TV transceiver system for separating video data from data linked with the video data and transmitting these data by the same channel has also been able to be provided.

### SUMMARY OF THE INVENTION

It is an object of the present invention to provide a system which can display a video image and data of a trainer which are desired to be seen by a trainee with a mobile communication device and which can display a video image and/or data of the trainee or a third party on the same screen without being overlapped while being linked with each other.

An aspect of the present invention uses a multi-functional, high-performance mobile image communication terminal such as a portable telephone, a mobile network system such as a PDC or/and a PHS, a gateway for performing protocol conversion or the like, and the Internet, one camera or a plurality of cameras for photographing a body action of a trainer such as a player actor, and a system for encoding video information of the camera to transfer the encoded information to a video server through a cable or/and wireless network circuit, and a system which receives various pieces of information of the body action and transfers the data to a data server through a cable or/and wireless network circuit.

Therefore, a trainee such as an auditory user searches a data server by the mobile image communication terminal to automatically calculate the data and video data related to the data, so that the data and the video data can be shown on the same screen while being linked with each other.

According to another aspect of the present invention, the data of the data server or/and the video server is data of a trainer such as a coach or an instructor, and these data and the data or/and the video image of the trainee are displayed on the same screen without being overlapped and compared with each other, so as to make it possible to perform training.

According to still another aspect of the present invention, in means for causing a trainer to train a manner of moving a body for a trainee, the trainer searches for two still images through mobile image communication from the video server or/and the data server on which the data of the trainee and displays the still images, and these still images are simultaneously displayed and compared and examined, so as to make the trainee to understand the difference between both the actions.

According to still another aspect of the present invention, in means for causing a trainer to train a manner of moving a body for a trainee, actions of a sport performed by the same trainee are picked as images from substantially the same place, the images are reproduced without being overlapped on the same screen such as a mobile display, any one of the images is set as a moving image, and the other image is set as a still image, so as to make the trainee to understand the relation between the images.

According to still another aspect of the present invention, a sport, an action, a movement, or the like performed by a trainee before the trainee is trained by a trainer is picked as an image, thereafter, the trainee picks a sport action performed after the trainee is trained by the trainer as an image from the same place, these images are reproduced without being overlapped on the same screen such as a mobile display, and the two images are simultaneously compared with each other and examined, so as to make the trainee to understand the degree of improvement.

According to still another aspect of the present invention, when a moving image of a sport action of a trainer or a trainee is reproduced-on a mobile display, a line or a grid-like line serving as a reference when the trainee sees the image is displayed on the image, so as to make the trainee to understand the degree of an act such as the sport, an action, or a movement.

According to still another aspect of the present invention, a moving image of a sport action of a trainer or a trainee is displayed on a mobile display as still images of respective frames, a basic line of a body featuring the frame is drawn on the corresponding image along the image, the image on the screen is switched to the next frame while the basic line is left on the screen, a basic line of the body featuring the frame is drawn on the corresponding image along the image, the basic lines of the body featuring the subsequent frames are drawn on the corresponding images along the images, finally, the image of the sport action is erased, and only a plurality of basic lines are displayed on one screen in place of the moving image, so as to make the trainee to understand the change of the basic lines of the body.

According to still another aspect of the present invention, a video still image of a sport action of a trainer or a trainee is displayed on a mobile display, and letters or/and symbols are described by the trainer on a part of the video still image, so as to make the trainee to understand a training point.

According to still another aspect of the present invention, sport actions at different places are simultaneously picked as images, the images are reproduced without being overlapped on the same screen of a mobile display, and the two images are simultaneously compared with each other, so as to make a trainee to understand the difference between both the images.

### BRIEF DESCRIPTION OF THE DRAWINGS

Fig. 1 is a block diagram of a system used in the present invention;
Fig. 2 is an illustrational diagram of Fig. 1;
Fig. 3 is a diagram showing an addressing form of golf in training;
Fig. 4 is a diagram showing a tee back form of golf in training;
Fig. 5 is a diagram obtained when a golf ball is hit in training;
Fig. 6 is an addressing diagram showing one of two images displayed on a screen as a still image and the other as a moving image to compare the two images with each other and to examine the images;
Fig. 7 is a top swing diagram showing one of two images displayed on a screen as a still image and the other as a moving image to compare the two images with each other and to examine the images;
Fig. 8 is a diagram showing a manner of moving a body in golf swing;
Fig. 9 is a diagram in which top swings of a trainer and a trainee in an actual golf course are compared with each other; and
Fig. 10 is a diagram in which forms of a trainee before training and after training are compared with each other to make the trainee to understand the difference between both the forms.

### DETAILED DESCRIPTION OF THE PREFERRED EMBODIMENTS

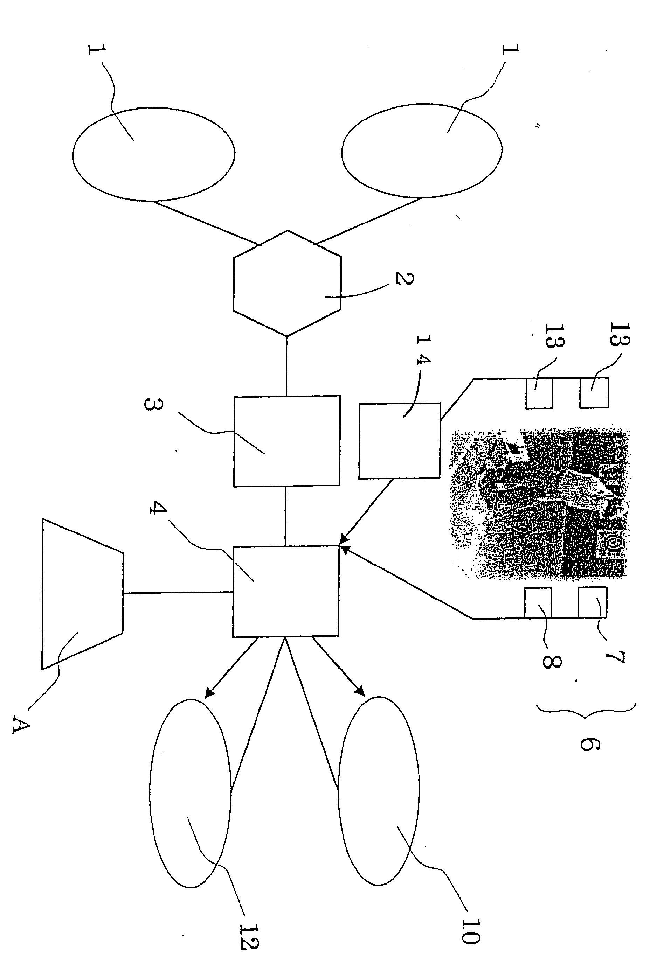

Fig. 1 shows a golf play as an example of the present invention. In Fig. 1, reference numeral (1) denotes a multi-functional, high-performance mobile communication device (to be referred to as a portable telephone terminal hereinafter) such as a portable telephone; (2) denotes a mobile communication network system such as a PDC/PHS; (3) denotes a gateway for performing protocol conversion; (4) denotes the Internet.

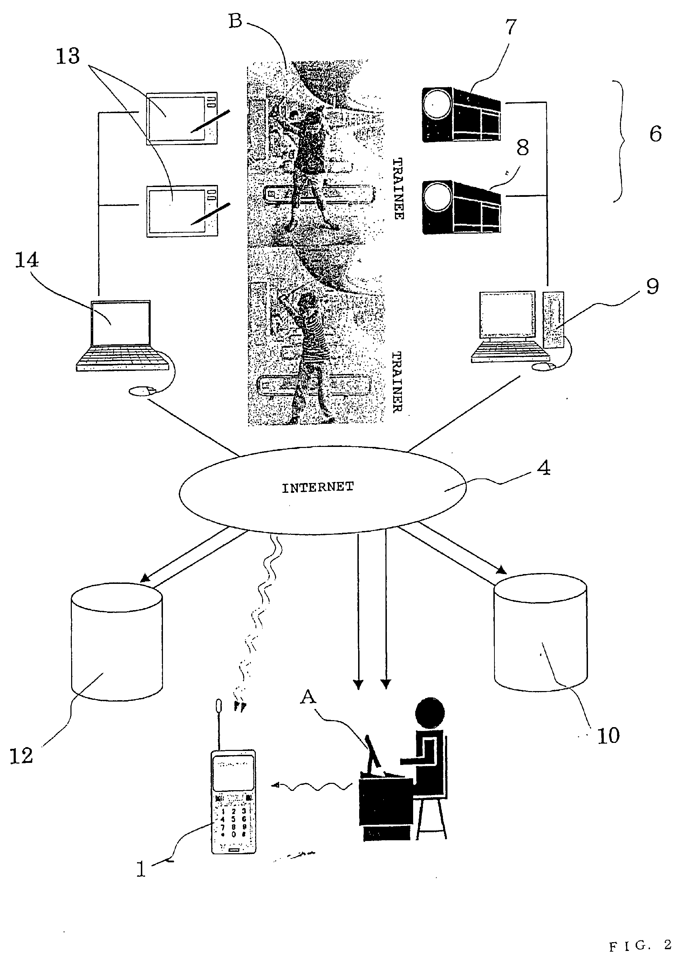

In Fig. 2, reference numeral (5) denotes a driving range; (6) denotes a plurality of cameras for a boom shot video image (7) or a zoom wide video image (8). The plurality of cameras (6) is connected to an encoder (9) including a digital disk recorder, a still image file device, a frame synchronizer, and the like and having a time compression function, a multiplexing function, and a packet transmission function. Reference numeral (1) denotes a video server connected to the cameras (6) through the Internet (4).

The camera (6) makes a boom shot video image to really capture the actions and situations of a body when a player plays, e.g., golf. In addition, the plurality of cameras (6) are prepared at important points such as a grip to obtain the zoom wide video image.

In Fig. 2, reference numeral (13) denotes a terminal to which data of every move of a player. In this embodiment, two terminals (13) are prepared to cover a lack of input data and to improve the reliability of the data.

In addition, reference numeral (12) denotes a data server. The data server can store data transmitted from the data terminal (13) through a data transfer device (14) and a network circuit, and can also store profiles of players and additional data (contents) if necessary.

Furthermore, the data server (12) has a data server program having a master maintenance function, a terminal master updating function, and a data searching function, and a data transfer function of a search result and a data convert program having an input data real time display data convert function, an input data file transceiver function, a database updating function, a database updating function, and a master updating file terminal transfer function.

With respect to the time compression function described above, since a protocol, i.e., MPEG2 (Moving Picture Experts Group 2) exists, time compression of information is performed by using the characteristics of the protocol, and a link of time and video images, a link of time and data, and the like are combined to each other, so that the various data can be incorporated.

More specifically, in the MPEG2, frames are not decoded in the order of reception. As frames subjected to time compression, I frame, P frame, and predicted B frame formed by the I and P frames are known.

For example, frames which received in the order of IBBP are decoded in the order of IPPB, the P frame is calculated for example, and the two B frames are calculated by using the I frame, so that two B frames are formed by using a new I frame. More specifically, by applying a process technique for the frames, two basic data stream formats are processed by software, so that packet multiplying transmission can be performed. In addition, data is incorporated as a closed-caption-added text data by a TS (Transform Stream) packet and transmitted to a trainee (user), so that the trainee (user) can select data according to his/her taste.

In Fig. 2, reference symbol (A) denotes a fixed terminal such as a personal computer. As a matter of course, the fixed terminal (A) can also search for data through the Internet (4). However, according to the present invention, especially, a mobile terminal (1) such as a portable telephone is used.

When the present invention is performed, as shown in the driving ranges shown in Fig. 2, at the driving range or an actual golf course, a trainee (B) picks images of a form of, e.g., a driver with the camera (6), and stores the images in a video image server (10) through the encoder (9) and the Internet (4).

A trainer uses a known system or program software in the fixed terminal (A) such as a personal computer to draw grid-like lines or graphics on the graphic. More specifically, for example, in golf, the trainer trains a trainee such that the position of the head of the trainee must not be moved especially when the trainee swings a golf club. This is performed for the following reason. Although the trainee cannot sufficiently understand that the position of the head must not be moved even though the trainee watches a screen on which the trainee plays golf, the trainee can easily understand that the position of the head must not be moved by drawing a plurality of grid-like lines on the screen.

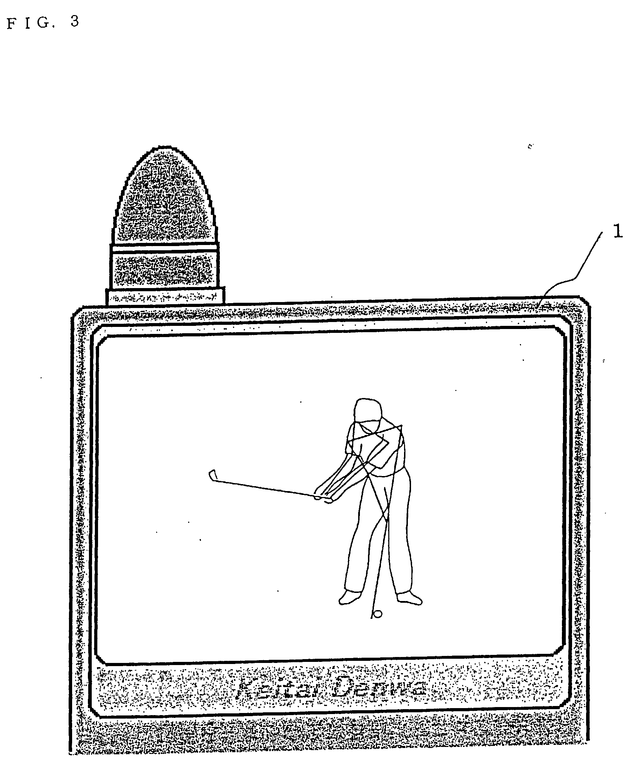

For the sake of descriptive convenience, an operation will be descried by only the parts of the configuration and the means. For example, a trainee who makes a request for her/his form in advance calls the video image server (10) by using the her/his portable telephone terminal (1) through the mobile communication net system (2), the gateway (3), and the Internet (4) to search for her/his driver form. As a result, as shown in Figs. 3 to 7, video images on which a plurality of lines are drawn can be displayed on the display of the mobile communication device (1).

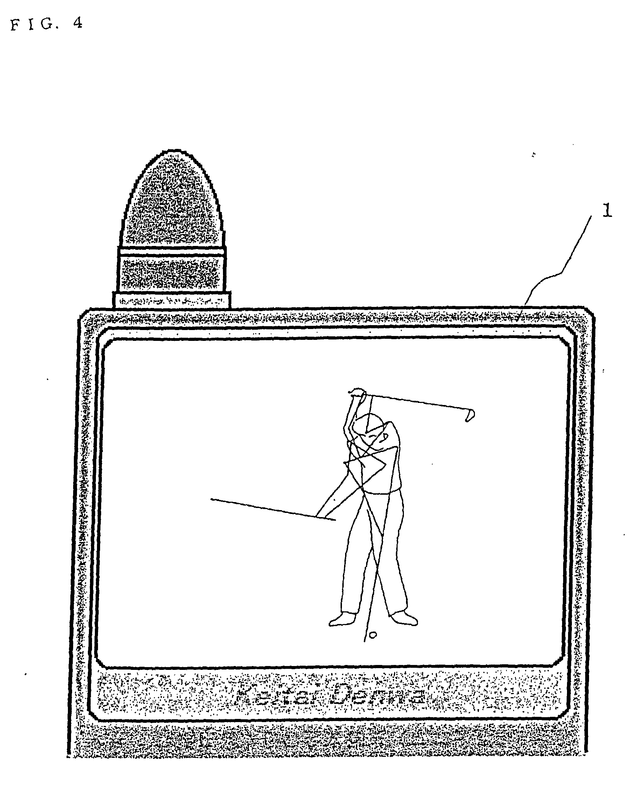

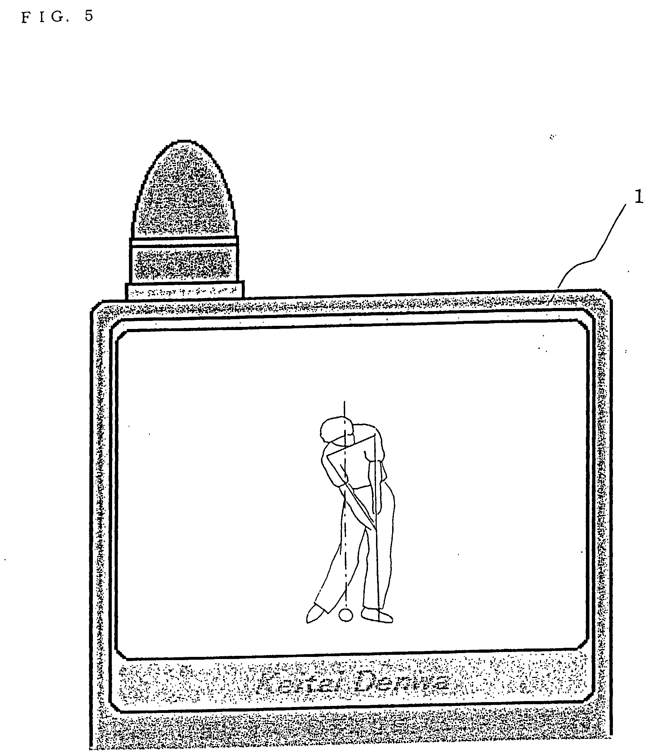

In Fig. 3, the left shoulder "excessively moves down" . As shown in Fig. 3, if the left shoulder is not swung along the upper side of the inverted triangle as shown in Fig. 3, a ball may be "hooked" or sliced. In a take-back state shown in Fig. 4, when the left shoulder excessively moves up, immediately after the ball shown in Fig. 5 is hit, i.e., in impact, the trainee is good because shaking of her/his head, i.e., so-called "sway" does not occur. When training is performed by using the method of the present invention, a correct form can be realized, and a preferable training result can be given to the trainee.

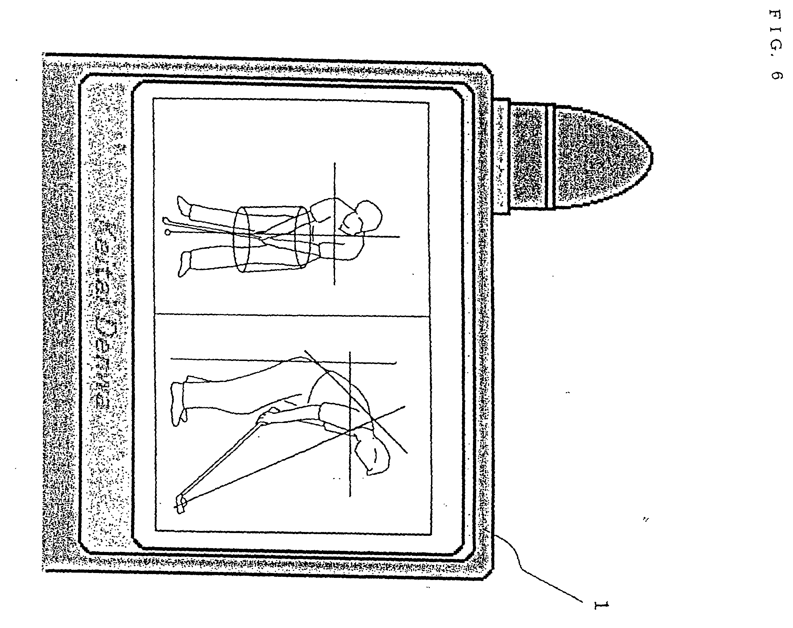

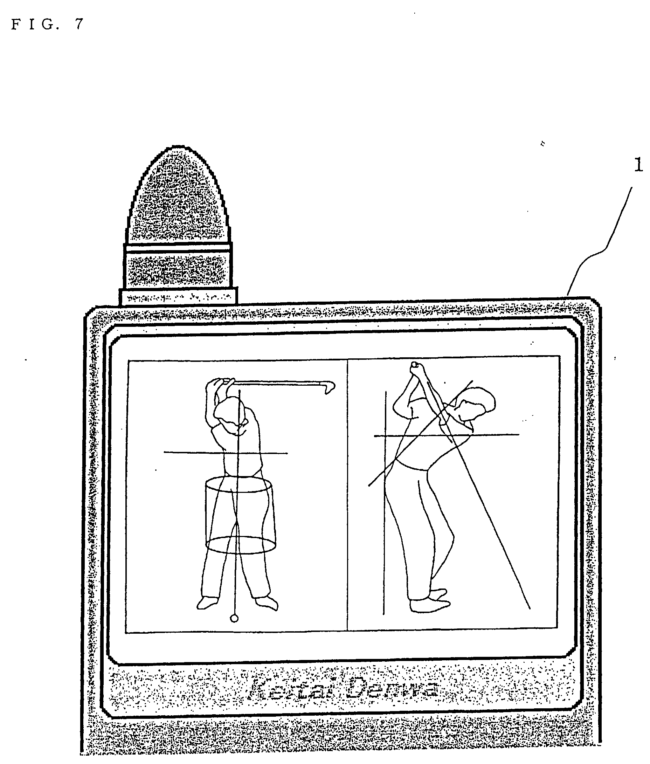

In addition, in Figs. 6 and 7, image of a form of the same trainee are picked from different positions, and the images are displayed without being overlapped on the same screen. An optimum range in which the body can be inclined and moved can also be indicated by using a line or a circle in place of a grid-like line. In this manner, training by the trainer can be correctly performed to make it possible that the trainee understands a good form.

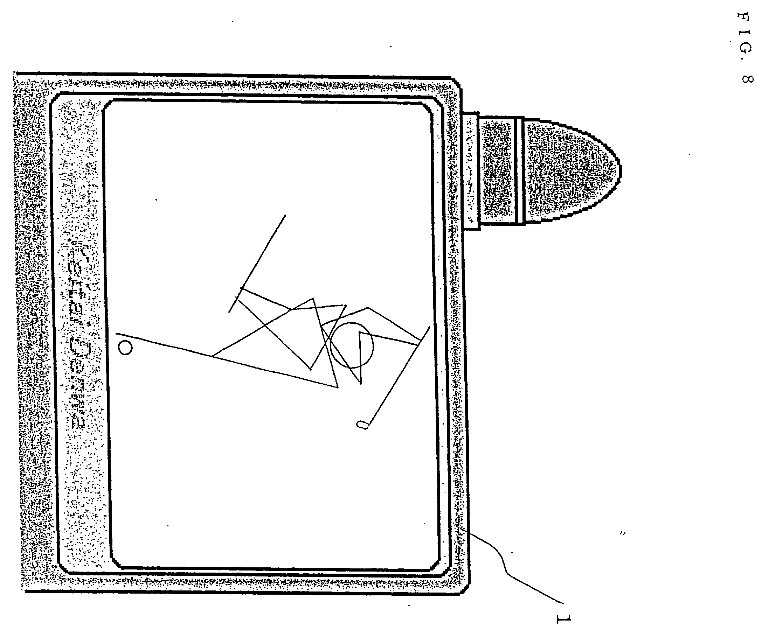

More specifically, in golf swing by using a club, by using a straight line connecting both the shoulders, a line connecting both the ends of the straight line to the hands through the elbows, and a line connecting the grip of the club to the club head, it can be decided whether a correct shot can be performed or not. When lines connecting both the shoulders and the hands always constitute the same triangle, it is understood that a shot can be performed with a correct form. However, as shown in Fig. 8, the above lines are drawn on each screen, the image is erased, and only the lines drawn as shown in Fig. 8 are extracted on the screen, so that the trainer can understandably explain to the trainee the correct form. In this manner, when training is performed by using the system according to the present invention, the trainee can understand a correct form and obtains a preferable training result.

In the video image server (10), a correct form including the position of a club face when the club of the trainee is addressed or set at the top, the position of the club in an impact or finish state, and a manner of folding arms is photographed and input in advance.

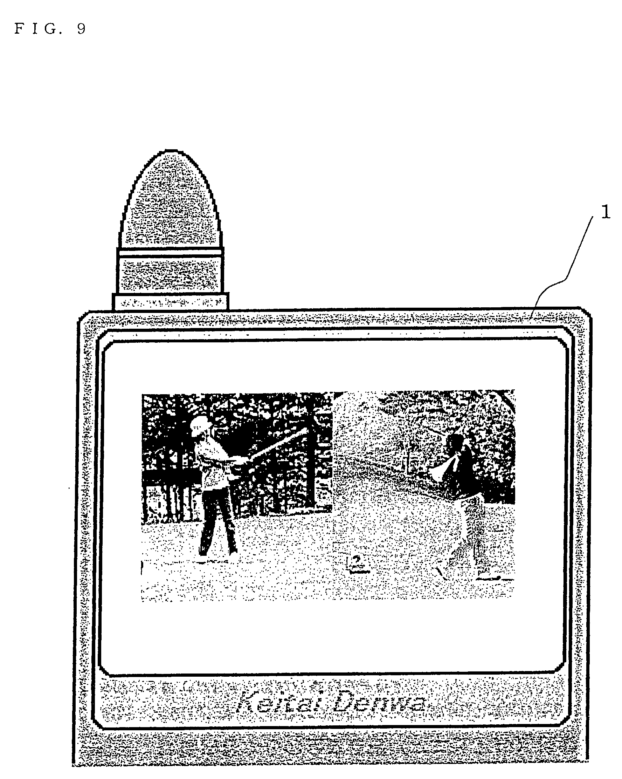

In this state, the trainee visually compares her/his form with a form of a professional trainer whose figure is similar to the trainee, so that the trainee wants to correct her/his form. Therefore, the trainee searches the video image server (10) for the video image of her/his top position through the mobile communication device (1) first, and, at the same time, the trainee searches the video image server (10) for the video image of a corresponding top position of the trainer. Both the video images are displayed in parallel as shown in Fig. 9. As a result, the difference between the form of the trainee (self) and the form of the trainer is apparent at glance. Therefore, points to be corrected can be easily understood.

In this case, one of the forms of the trainee and the trainer is displayed as a still image, and the other is displayed as a moving image, so as to make it possible that the trainee understands the correct form.

In addition, when the trainer performs training while watching the image of the trainee, the system is designed such that letters or graphics for the training can be drawn on the image of the trainee.

The above description has been made by using a form of a golf play as an example. As a matter of course, the present invention is not limited to golf, and the present invention is effective to correct forms of all kinds of sports. When training is performed by using the system, a trainee can understand her/his weak points. For this reason, the form of the trainee could be corrected into a correct form, and a preferable training result could be obtained.

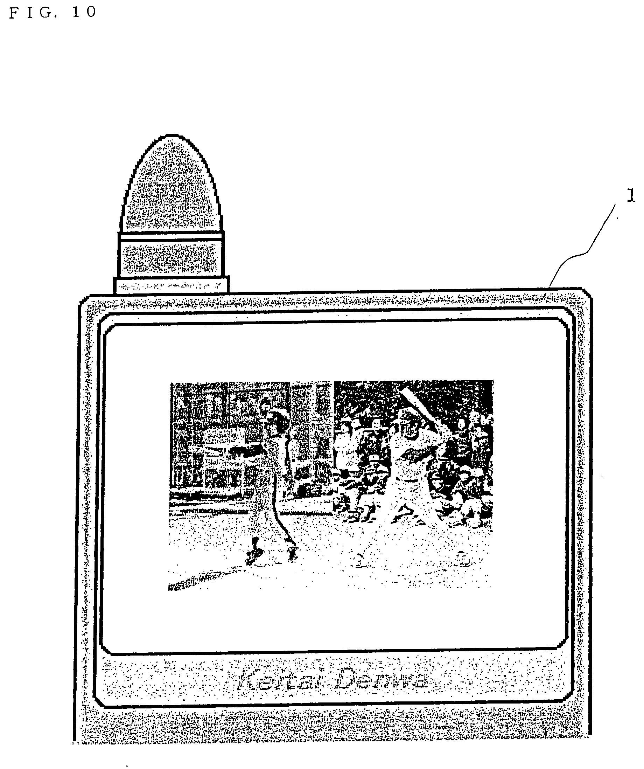

More specifically, in Fig. 10, the present invention is applied to training of baseball, the right and left side of a screen show the same trainee (student). As the right image, an image obtained before a trainer performs training is picked. Thereafter, the training is performed, an image (left side) obtained after the form is improved by the training is arranged on the left side, and the left elbow is not sufficiently stretched out. For this reason, the trainer points out the weak point, and trainer shows to the trainee the right screen picked thereafter. As a result, the trainer makes the trainee to understand the degree of improvement and to recognize the difference between the correct form and the wrong form, so that a preferable training result can be obtained.

In general, according to the present invention, as has been described above, by using a mobile communication terminal such as a portable telephone, the images of plays or the like of a trainer and a trainee are displayed on two divided monitor displays such that the images are compared with each other. For this reason, a very understandable training method can be easily and simply provided.

## Claims

1. A training searching method for a manner of moving a body in a sport using mobile image communication achieved by mobile image communication, comprising: a multi-functional, high-performance mobile image communication terminal such as a portable telephone, a mobile network system such as a PDC or/and a PHS, a gateway for performing protocol conversion or the like, and the Internet,
one camera or a plurality of cameras for photographing a body action of a trainer such as a player actor, and a system for encoding video information of the camera to transfer the encoded information to a video server through a cable or/and wireless network circuit, and a system which receives various pieces of information of the body action and transfers the data to a data server through a cable or/and wireless network circuit, and
wherein an auditory user searches a data server by the mobile image communication terminal, and can see the data and video data related to the data on the same screen while automatically linking the data with each other.

2. A training searching method for a manner of moving a body in a sport using mobile image communication achieved by mobile image communication according to claim 1, wherein the data of the data server or/and the video server is data of a trainer such as a coach or an instructor, and these data and the data or/and the video image of the trainee are displayed on the same screen without being overlapped and compared with each other, so as to make it possible to perform training.

3. A training searching method for a manner of moving a body in a sport using mobile image communication achieved by mobile image communication according to claim 1, wherein, in means for causing a trainer to train a manner of moving a body for a trainee, the trainer searches for two still images through mobile image communication from the video server or/and the data server on which the data of the trainee and displays the still images, and these still images are simultaneously displayed and compared and examined, so as to make the trainee to understand the difference between both the actions.

4. A training searching method for a manner of moving a body in a sport using mobile image communication achieved by mobile image communication according to claim 2, wherein, in means for causing a trainer to train a manner of moving a body for a trainee, the trainer searches for two still images through mobile image communication from the video server or/and the data server on which the data of the trainee and displays the still images, and these still images are simultaneously displayed and compared and examined, so as to make the trainee to understand the difference between both the actions.

5. A training searching method for a manner of moving a body in a sport using mobile image communication achieved by mobile image communication according to claim 1, wherein, in means for causing a trainer to train a manner of moving a body for a trainee, any one of the images of the trainer and the trainee is set as a moving image, and the other image is set as a still image, so as to make the trainee to understand the relation between the images.

6. A training searching method for a manner of moving a body in a sport using mobile image communication achieved by mobile image communication according to claim 2, wherein, in means for causing a trainer to train a manner of moving a body for a trainee, any one of the images of the trainer and the trainee is set as a moving image, and the other image is set as a still image, so as to make the trainee to understand the relation between the images.

7. A training searching method for a manner of moving a body in a sport using mobile image communication achieved by mobile image communication according to claim 3, wherein, in means for causing a trainer to train a manner of moving a body for a trainee, any one of the images of the trainer and the trainee is set as a moving image, and the other image is set as a still image, so as to make the trainee to understand the relation between the images.

8. A training searching method for a manner of moving a body in a sport using mobile image communication achieved by mobile image communication according to claim 4, wherein, in means for causing a trainer to train a manner of moving a body for a trainee, any one of the images of the trainer and the trainee is set as a moving image, and the other image is set as a still image, so as to make the trainee to understand the relation between the images.

9. A training searching method for a manner of moving a body in a sport using mobile image communication achieved by mobile image communication according to claim 1, wherein, in means for causing a trainer to train a manner of moving a body for a trainee, a sport, an action, a movement, or the like performed by the same trainee are picked as images from substantially the same place, the images are reproduced without being overlapped on the same screen such as a mobile display, any one of the images is set as a moving image, and the other image is set as a still image, so as to make the trainee to understand the relation between the images.

10. A training searching method for a manner of moving a body in a sport using mobile image communication achieved by mobile image communication according to claim 2, wherein, in means for causing a trainer to train a manner of moving a body for a trainee, a sport, an action, a movement, or the like performed by the same trainee are picked as images from substantially the same place, the images are reproduced without being overlapped on the same screen such as a mobile display, any one of the images is set as a moving image, and the other image is set as a still image, so as to make the trainee to understand the relation between the images.

11. A training searching method for a manner of moving a body in a sport using mobile image communication achieved by mobile image communication according to claim 3, wherein, in means for causing a trainer to train a manner of moving a body for a trainee, a sport, an action, a movement, or the like performed by the same trainee are picked as images from substantially the same place, the images are reproduced without being overlapped on the same screen such as a mobile display, any one of the images is set as a moving image, and the other image is set as a still image, so as to make the trainee to understand the relation between the images.

12. A training searching method for a manner of moving a body in a sport using mobile image communication achieved by mobile image communication according to claim 4, wherein, in means for causing a trainer to train a manner of moving a body for a trainee, a sport, an action, a movement, or the like performed by the same trainee are picked as images from substantially the same place, the images are reproduced without being overlapped on the same screen such as a mobile display, any one of the images is set as a moving image, and the other image is set as a still image, so as to make the trainee to understand the relation between the images.

13. A training searching method for a manner of moving a body in a sport using mobile image communication achieved by mobile image communication according to claim 5, wherein, in means for causing a trainer to train a manner of moving a body for a trainee, a sport, an action, a movement, or the like performed by the same trainee are picked as images from substantially the same place, the images are reproduced without being overlapped on the same screen such as a mobile display, any one of the images is set as a moving image, and the other image is set as a still image, so as to make the trainee to understand the relation between the images.

14. A training searching method for a manner of moving a body in a sport using mobile image communication achieved by mobile image communication according to claim 6, wherein, in means for causing a trainer to train a manner of moving a body for a trainee, a sport, an action, a movement, or the like performed by the same trainee are picked as images from substantially the same place, the images are reproduced without being overlapped on the same screen such as a mobile display, any one of the images is set as a moving image, and the other image is set as a still image, so as to make the trainee to understand the relation between the images.

15. A training searching method for a manner of moving a body in a sport using mobile image communication achieved by mobile image communication according to claim 7, wherein, in means for causing a trainer to train a manner of moving a body for a trainee, a sport, an action, a movement, or the like performed by the same trainee are picked as images from substantially the same place, the images are reproduced without being overlapped on the same screen such as a mobile display, any one of the images is set as a moving image, and the other image is set as a still image, so as to make the trainee to understand the relation between the images.

16. A training searching method for a manner of moving a body in a sport using mobile image communication achieved by mobile image communication according to claim 8, wherein, in means for causing a trainer to train a manner of moving a body for a trainee, a sport, an action, a movement, or the like performed by the same trainee are picked as images from substantially the same place, the images are reproduced without being overlapped on the same screen such as a mobile display, any one of the images is set as a moving image, and the other image is set as a still image, so as to make the trainee to understand the relation between the images.

17. A training searching method for a manner of moving a body in a sport using mobile image communication achieved by mobile image communication according to claims 1 to 5, wherein a sport, an action, a movement, or the like performed by a trainee before the trainee is trained by a trainer is picked as an image, thereafter, the trainee picks a sport, an action, a movement, or the like performed after the trainee is trained by the trainer as an image from the same place, these images are reproduced without being overlapped on the same screen such as a mobile display, and the two images are simultaneously compared with each other and examined, so as to make the trainee to understand the degree of improvement.

18. A training searching method for a manner of moving a body in a sport using mobile image communication achieved by mobile image communication according to claims 1 to 6, wherein, when a video moving image of a sport, an action, a movement, or the like of a trainer or a trainee is reproduced on a mobile display, a line or a grid-like line serving as a reference when the trainee sees the image is displayed on the image, so as to make the trainee to understand the degree of an act such as the sport, an action, or a movement.

19. An automatic searching system obtained by mobile image communication according to claims 1 to 7, wherein a moving image of a sport, an action, a movement, or the like of a trainer or a trainee is displayed on a mobile display as still images of respective frames, a basic line of a body featuring the frame is drawn on the corresponding image along the image, the image on the screen is switched to the next frame while the basic line is left on the screen, a basic line of the body featuring the frame is drawn on the corresponding image along the image, the basic lines of the body featuring the subsequent frames are drawn on the corresponding images along the images, finally, the image of the sport, the action, the movement, or the like is erased, and only a plurality of basic lines are displayed on one screen in place of the moving image, so as to make the trainee to understand the change of the basic lines of the body.

20. An automatic searching system obtained by mobile image communication according to claims 1 to 8, wherein a video still image of a sport, an action, a movement, or the like of a trainer or a trainee is displayed on a mobile display or the like, and letters or/and symbols are described by the trainer on a part of the video still image, so as to make the trainee to understand a training point.

21. A training searching method for a manner of moving a body in a sport using mobile image communication achieved by mobile image communication according to claim 1, wherein sports, actions, movements, or the like at different places are simultaneously picked as images, the images are reproduced without being overlapped on the same screen of a mobile display, and the two images are simultaneously compared with each other, so as to make a trainee to understand the difference between both the images.

22. A training searching method for a manner of moving a body in a sport using mobile image communication achieved by mobile image communication according to claim 2, wherein sports, actions, movements, or the like at different places are simultaneously picked as images, the images are reproduced without being overlapped on the same screen of a mobile display, and the two images are simultaneously compared with each other, so as to make a trainee to understand the difference between both the images.
